(19) Europäisches Patentamt
European Patent Office
Office européen des brevets

(11) **EP 4 084 620 B1**

(12) # EUROPEAN PATENT SPECIFICATION

(45) Date of publication and mention
of the grant of the patent:
**11.03.2026   Bulletin 2026/11**

(21) Application number: **20842708.8**

(22) Date of filing: **22.12.2020**

(51) International Patent Classification (IPC):
***A23C 9/154*** *(2006.01)*       ***A23C 9/13*** *(2006.01)*
***A23C 9/137*** *(2006.01)*

(52) Cooperative Patent Classification (CPC):
(C-Sets available)
**A23C 9/154; A23C 9/1315; A23C 9/137;**
**A23C 9/1542; A23C 9/1544;** A23L 29/212;
A23V 2002/00                                    (Cont.)

(86) International application number:
**PCT/EP2020/087661**

(87) International publication number:
**WO 2021/136728 (08.07.2021 Gazette 2021/27)**

(54) **USE OF A STARCH MIXTURE IN A DAIRY PRODUCT**

VERWENDUNG EINES GEMISCHES AUS STÄRCKEN ZUR HERSTELLUNG EINES
MILCHPRODUKTS

UTILISATION D'UN MELANGE D'AMIDONS DANS UN PRODUIT LAITIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.12.2019   CN 201911395136**

(43) Date of publication of application:
**09.11.2022   Bulletin 2022/45**

(73) Proprietor: **ROQUETTE FRERES
62136 Lestrem (FR)**

(72) Inventors:
• **PORA, Bernard**
**Shanghai (CN)**
• **HASJIM, Jovin**
**Putuo District Shanghai (CN)**
• **TAO, Jingling**
**Shanghai (CN)**

(74) Representative: **Plasseraud IP
104 Rue de Richelieu
CS92104
75080 Paris Cedex 02 (FR)**

(56) References cited:
WO-A1-2019/095168      WO-A1-2020/053066
CN-A- 1 961 729         CN-A- 107 821 597
CN-A- 108 142 556       CN-A- 109 430 410

• **JAMES N BEMILLER: "Pasting, paste, and gel
properties of starchhydrocolloid combinations",
CARBOHYDRATE POLYMERS, APPLIED
SCIENCE PUBLISHERS , LTD BARKING, GB, vol.
86, no. 2, 26 May 2011 (2011-05-26), pages 386 -
423, XP028240859, ISSN: 0144-8617, [retrieved
on 20110603], DOI: 10.1016/
J.CARBPOL.2011.05.064**

**(Cont. next page)**

(52)  Cooperative Patent Classification (CPC): (Cont.)

C-Sets
A23V 2002/00, A23V 2200/242, A23V 2250/5118

## Description

### Field of the invention

The present invention relates to a dairy product comprising a starch mixture. The present invention also relates to a process of fabricating the dairy product.

### Background

Starches are very important ingredients in the food industry, for example as thickening agents, gelling agents, texturing agents or stabilizing agents.

The thickening properties of starches are the result of the hydration and swelling of starch granules when an aqueous starch suspension is heated, which causes the viscosity of the starch suspension to increase. However, swollen and hydrated granules are not stable, and are thus liable to bursting. Indeed, after an initial peak in viscosity, the viscosity of starch suspensions quickly decreases again. This is particularly the case in the presence of shear and/or under acidic conditions. In most food applications, it is undesirable for the viscosity of a thickened product to decrease again after reaching an initial peak. Instead, it is usually desirable for the viscosity of a thickened product to remain stable or to further increase over time, even in the presence of shear and/or under acidic conditions. Many attempts have been made to improve the properties of starches such that they are able to provide the viscosity stability, shear tolerance and acid tolerance required in many food applications.

In applications where it is desired to thicken a food product which is to be subjected to severe acid and/or heat and/or shear conditions during either its processing, its end use or its storage, chemically modified starches, which are remarkably tolerant of such extreme conditions, have traditionally been used. A chemically modified starch is produced by various crosslinking techniques wherein a chemical reagent, such as phosphorus oxychloride, sodium trimetaphosphate and epichlorohydrin, is used to form crosslinks between the polysaccharides in the starch thereby altering its viscosity and stability characteristics at elevated temperatures.

However, a recent trend in the food industry has been growing consumer demand for so-called "clean-labelled" or non-chemically modified ingredients. Indeed, many consumers are looking for food products with clean label ingredients, including clean label starches instead of chemically modified starches, especially for healthy food products, such as dairy products.

It has been provided physically and/or enzymatically modified waxy based starches for yogurt applications, such as Novation 2300 from Ingredion (disclosed in the patent EP0721471B1) and Claria+ from Tate and Lyle (disclosed in the patent applications WO2013/173161A1 and WO2014/053833A). Patent application WO 2019/095168 A1 discloses the use of starch and modified starch as texture stabilizers in yogurt products. However, these starches present higher susceptibility to shear thinning than chemically modified starches. Furthermore, although they are modified without the addition of chemical reagents, some of the physical treatments can randomly change the chemical structure of the starches, such as creating new linkages and thus crosslinking, which is very similar to the effect of chemical reaction.

Patent application WO 2019/095168 A1 discloses the use of starch and modified starch as texture stabilizers in yogurt products.

CN 1 961 729 discloses a buckwheat wolfberry nutritious powder comprising 60% of buckwheat flour and 14,53% milk powder.

There is thus a need to develop replacements for such chemically, physically and enzymatically modified starches which exhibit similar and even improved performances in terms of viscosity stability, shear tolerance and acid tolerance while being not regarded or classified as chemically modified for labelling purposes.

The present inventors have surprisingly found that a specific starch mixture fulfil these criteria.

### Summary of the invention

A first object of the present invention is a dairy product comprising more than 70% of milk by weight with respect to the total weight of the dairy product, and a starch mixture, the starch mixture consisting of:

(a) a native buckwheat starch, and
(b) optionally a second native starch selected from the group consisting of waxy maize starch, maize starch, tapioca starch, waxy tapioca starch, potato starch, waxy potato starch, sweet potato starch, waxy sweet potato starch, rice starch, waxy rice starch, millet starch, amaranth starch, arrowroot starch, lotus root starch, quinoa starch, and mixtures thereof, preferably potato starch, tapioca starch or sweet potato starch.

A second object of the present invention is a process of fabricating the dairy product of the present invention, comprising the steps of:

(a) Mixing all ingredients used for preparing the dairy product for 5 to 60 minutes, preferably for 15 to 45 minutes, and more preferably for approximately 30 minutes,
(b) Preheating the mixture obtained in step (a) to a temperature comprised between 50°C and 100°C, preferably between 60°C and 80°C, and more preferably to approximately 65°C,
(c) Heating the preheated mixture obtained in step (b) at a temperature comprised between 60°C and 145°C for 1 second to 60 minutes, preferably at a temperature comprised between 80°C and 120°C for 1 to 30 minutes, and more preferably at approximately 95°C for approximately 5 minutes,
(d) Cooling the heated mixture obtained in step (c) and optionally adding a starter culture,
(e) Fermenting the cooled mixture which optionally comprises the started culture obtained in step (d) at a temperature comprised between 4°C and 60°C, preferably between 20°C and 50°C and more preferably at approximately 43°C until the mixture has a pH comprised between 3 and 5, preferably between 3.5 and 4.8, and more preferably a pH of 4.6,
(f) Smoothing the fermented mixture obtained in step (e) with a homogenizer, and
(g) Packing the smooth mixture obtained in step (f).

**Detailed description**

A first object of the present invention is a dairy product comprising more than 70% of milk by weight with respect to the total weight of the dairy product, and a starch mixture, the starch mixture consisting of:

(a) a native buckwheat starch, and
(b) optionally a second native starch selected from the group consisting of waxy maize starch, maize starch, tapioca starch, waxy tapioca starch, potato starch, waxy potato starch, sweet potato starch, waxy sweet potato starch, rice starch, waxy rice starch, millet starch, amaranth starch, arrowroot starch, lotus root starch, quinoa starch, and mixtures thereof, preferably potato starch, tapioca starch or sweet potato starch.

As used herein the expression "dairy product" refers to, but is not limited to, milk, cultured milk (such as cheese, yogurt, sour cream, and kefir cream) and ice cream, preferably yogurt.
As used herein the expression "native starch" refers to a starch found in nature in an unmodified form. Typical sources for the starches are cereal, tubers, roots, legumes and fruits. The native source can be can be waxy maize, maize, wheat, waxy wheat, tapioca, waxy tapioca, potato, waxy potato, sweet potato, waxy sweet potato, pea, mung bean, rice, waxy rice, millet, amaranth, arrowroot, lotus root, quinoa and buckwheat. Native starch is normally extracted using either wet milling or dry milling known process.
As used herein the expression "native buckwheat starch" refers to buckwheat starch coming from natural source. It does not result from enzymatic or chemical processing methods. Furthermore, it does not result from extreme physical processing methods such as dehydration and heat treatment at temperature above 50°C. Native buckwheat starch is recovered from buckwheat grain (*Fagopyrum esculentum*) by extraction processes. Buckwheat starch can be extracted directly from buckwheat groat or from buckwheat flour having high starch content (50-70% of starch in groat and flour).
The native buckwheat starch useful for the present invention is recovered from native sources. It can be extracted from buckwheat groat or from buckwheat flour.
An example of a first extraction process comprises the following steps:

1) preparing, at a temperature equal to or below 50°C, an aqueous suspension from the buckwheat flour (dry grinding) or from the buckwheat groat (wet grinding);
2) separating the fiber fraction from the starch and protein fraction by the difference in particle sizes at a temperature comprised between room temperature and 50°C, preferably by filtration, by using sieves;
3) fractionating the aqueous suspension by density at pH between 7 and 9 so as to obtain a light fraction comprising proteins, soluble carbohydrates and salts, and a heavy fraction comprising starch, preferably by using a horizontal screw decanter, a centrifugal decanter or a hydrocyclone;
4) adding water to the heavy fraction at a temperature comprised between room temperature and 50°C, so as to resuspend the heavy fraction;
5) treating the starch fraction at pH between 7 and 9 and at a temperature comprised between room temperature and 50°C at least one time, so as to remove remaining proteins, preferably using a horizontal screw decanter, a centrifugal decanter or a hydrocyclone, more preferably hydrocylone;
6) neutralizing the pH of starch fraction to 5-7.
7) drying the starch fraction, preferably by using fluidized bed dryer or hot air dryer;

8) recovering the dried starch.

Another example of a second extraction process comprises the following steps:

1) preparing, at a temperature equal to or below 50°C, an aqueous suspension from the buckwheat flour (dry grinding) or from the buckwheat groat (wet grinding) with a pH between 7 and 9;
2) fractionating the aqueous suspension by density so as to obtain a light fraction comprising proteins, soluble carbohydrates and salts, and a heavy fraction comprising starch and fibers, preferably by using a horizontal screw decanter, a centrifugal decanter or a hydrocyclone;
3) adding water to the heavy fraction at a temperature comprised between room temperature and 50°C, so as to resuspend the heavy fraction;
4) separating the fiber fraction from the starch fraction by the difference in particle sizes at a temperature comprised between room temperature and 50°C, preferably by filtration, by using sieves;
5) treating the starch fraction at pH between 7 and 9 and at a temperature comprised between room temperature and 50°C at least one time, so as to remove remaining proteins, preferably using a horizontal screw decanter, a centrifugal decanter or a hydrocylone, more preferably hydrocylone;
6) neutralizing the pH of starch fraction to 5-7.
7) drying the starch fraction, preferably by using fluidized bed dryer or hot air dryer;
8) recovering the dried starch.

Advantageously, the extraction process is free of organic solvents and free of chemical reactants. There is no chemical transformation. Thus, the products incorporating native buckwheat starch obtained from the extraction process are natural and clean label products. Furthermore, buckwheat is an ancient grain which is perceived as a healthy ingredient by the consumers.

The native buckwheat starch useful for the present invention is not gelatinized but is under granular form.

Native buckwheat starch has higher pasting temperature and thus requires higher temperature to swell than most of native starches. In particular, its swelling power is stable throughout the heating process, such as pasteurization or sterilization process. Therefore, the starch granules are not easily broken during the dairy product processing and the viscosity developed during processing can be easily maintained. In particular, native buckwheat starch can withstand to harsh treatments, such as homogenization and sterilization, keeping its granular structure after processing. Native buckwheat starch also shows low degree of retrogradation when stored in a refrigerator, thus providing a chilled dairy product with a stable consistency. Furthermore, native buckwheat starch has low or no syneresis after being repeatedly frozen and thawed. Consequently, native buckwheat starch has a high stability during heating process and during storage. Consequently, the starch mixture of the present invention which contains native buckwheat starch has the same properties.

In a preferred embodiment, the second native starch is a potato starch, tapioca starch or sweet potato starch.

It has been surprisingly found that a small amount of native potato starch, tapioca starch or sweet potato starch added to native buckwheat starch improves the smooth texture of the dairy product, in term of preventing lump formation and sandiness sensation, without sacrificing its viscosity and stability during sterilization/pasteurization process, homogenization process, and during cold storage (including syneresis). In particular, it has been found that potato starch, tapioca starch or sweet potato starch increases the RVA (Rapid Viscosity Analysis) peak viscosity of buckwheat starch at all concentrations, without a large decrease in the final viscosity of the starch mixture. Peak viscosity is the maximum viscosity when native starch slurry is heated with stirring, whereas final viscosity is the viscosity of the starch paste held at 50°C with stirring after being heated to 95°C. Therefore, native potato starch, tapioca starch or sweet potato starch has less negative impacts on the viscosity of yogurt containing buckwheat starch, than other native starches.

In a particular embodiment, the native buckwheat starch represents from 50 to 100%, preferably from 75 to 100% and more preferably from 90 to 100% by weight with respect to the total weight of the starch mixture, and the second native starch represents from 0 to 50%, preferably from 0 to 25% and more preferably from 0 to 10% by weight with respect to the total weight of the starch mixture. If the second native starch is more than 50% by weight with respect to the total weight of the starch mixture, the benefits of buckwheat starch, such as high pasting temperature and low tendency to retrograde, will be less obvious.

In a particular embodiment, the starch mixture represents from 0.05% to 10%, preferably from 0.1% to 5% and more preferably from 0.5% to 2% by weight with respect to the total weight of the dairy product.

The starch mixture of the present invention enables to offer the required properties for a dairy product in terms of texture improvement, viscosity stability, shear tolerance and/or acid tolerance. Furthermore, the starch mixture of the present invention prevents lump formation and sandiness texture in the finished dairy product.

In a particular embodiment, the starch mixture has a peak viscosity ranging from 1500 to 4200 cP, preferably from 1800 to 4000 cP and more preferably from 2200 to 3800 cP, when heated using RVA (Rapid Viscosity Analysis) up to 95°C at 8% suspension. Within these peak viscosity ranges, the starch mixture still has a stable viscosity during pasteurization/sterilization and homogenization processes and during cold storage while preventing lump formation.

In a particular embodiment, the starch mixture has a pasting temperature ranging from 65°C to 85°C, preferably from 68°C to 80°C and more preferably from 70°C to 75°C.

In a particular embodiment, the dairy product of the present invention further comprises optionally sugars, milk, optionally water, optionally starter culture, optionally whey protein, and optionally additives.

Said sugars may be selected from the group comprising sucrose (table sugar), fructose, mannose, maltose, isomaltulose, allulose, tagatose, glucose such as, but not limited to, glucose syrup, cane sugar, honey, agave syrup, maple syrup, and mixtures thereof.

The dairy product of the present invention comprises from 0% to 30%, preferably from 3% to 20% and more preferably from 5% to 10% of sugars by weight with respect to the total weight of the dairy product.

By "milk" it is herein understood skimmed milk, whole milk, milk powder, whole milk powder, low fat milk, milk fat, buttermilk, cream, and mixtures thereof.

The dairy product of the present invention comprises more than 70%, preferably more than 80%, more preferably more than 90%, and even more preferably between 90% and 95% of milk by weight with respect to the total weight of the dairy product.

The dairy product of the present invention comprises from 0% to 20%, preferably from 0.01% to 10% and more preferably from 0.1% to 5% of water by weight with respect to the total weight of the dairy product.

By "starter culture" it is herein understood live bacteria (such as *Lactobacillus delbrueckii* subsp. *bulgaricus* and *Streptococcus thermophilus*) that can ferment milk and lower its pH to prevent the growth of pathogens. Other *lactobacilli* and *bifidobacteria* can also be added during or after culturing. A dollop of cultured milk products with live bacteria can be used to replace starter culture.

In a particular embodiment, the dairy product of the present invention comprises from 0% to 1%, preferably from 0.0001% to 0.05% and more preferably from 0.001% to 0.005% by weight of starter culture with respect to the total weight of the dairy product.

By "whey protein" it is herein understood a mixture of proteins obtained from whey, the liquid by product after curdling process in cheese production. It comprises whey protein concentrate and whey protein isolate.

Other sources of protein can also be used to replace or enrich the protein content in the dairy product, including soy protein, pea protein, rice protein, wheat protein, hemp protein, and the mixtures thereof.

In a particular embodiment, the dairy product of the present invention comprises from 0% to 10%, preferably from 0.01% to 5% and more preferably from 0.1% to 3% by weight of whey protein and/or other sources of protein with respect to the total weight of the dairy product.

By "additives" it is herein understood acidity regulators, preservatives, emulsifiers, colorants, sweeteners, flavor enhancers, flavoring substances, humectants, anticaking agents, antioxidants, hydrocolloids, nutrient enhancers, bulking agent, and mixtures thereof.

By "acidity regulators" it is herein understood substances used for maintaining or changing the pH value of food.

By "preservatives" it is herein understood substances to prevent food from putrefying and deteriorating and to extend the shelf life of food.

By "emulsifiers" it is herein understood substances that can improve the surface tension between the various constitutive phases in the emulsification body to form the even dispersion or emulsification bodies.

By "colorants" it is herein understood substances that adds color to food and/or improves the color of food.

By "sweeteners" it is herein understood substances that are not simple sugars, but provides sweetness to food, such as, but not limited to, neotame, sucralose, aspartame, stevia extract (or steviol glycosides), acesulfame K, sugar alcohols (sorbitol, xylitol, maltitol, and erythritol), luohanguo extract, or mixture thereof.

By "flavor enhancers" it is herein understood substances to complement or enhance the original flavor of food.

Examples of flavor enhancer comprise, but are not limited to, disodium 5'-ribonucleotide, disodium 5'-inosinate, disodium 5'-guanylate, monosodium glutamate, and mixtures thereof.

By "flavoring substances" it is herein understood substances that can be used for allocating food essence and enhancing food flavor.

Examples of flavoring substances comprise, but are not limited to, substances listed in national food safety standards GB 2760-2014, (+/-)-1-Cyclohexylethanol, 2(4)-Ethyl-4(2),6-dimethyldihydro-1,3,5-dithiazinane, 3-Heptyldihydro-5-methyl-2(3H)-furanone, vanillyl alcohol, 6-[5(6)-Decenoyloxy] decanoic acid, glucosyl steviol glycosides, 3-{1-[(3,5-dimethyl-1,2-oxazol-4-yl)methyl]-1H-pyrazol-4-yl}-1-(3-hydroxybenzyl) imidazolidine-2,4-dione, 4-amino-5-[3-(isopropylamino)-2,2-dimethyl-3-oxopropoxy]-2-methylquinoline-3-carboxylic acid sulfate, 9-decen-2-one, 6-Methylheptanal, cyclopropanecarboxylic acid (2-isopropyl-5-methyl-cyclohexyl)-amide, 4-Hydroxy-4-methyl-5-hexenoic acid gamma lactone, furfuryl 2-methyl-3-furyl disulfide, 4-Decenoic acid, 2-(4-methyl-5-thiazolyl)ethyl propionate, 4,5-Octanedione, ethyl 5-hydroxydecanoate, dioctyl adipate, ethyl linalyl ether, 2-Propionylpyrrole, ally 1-propenyl disulfide, 2-Acetoxy-3-butanone, and mixtures thereof.

By "humectants" it is herein understood substances added for the purpose of helping retention of water in food.

Examples of humectants comprise, but are not limited to, maltitol and maltitol syrup, polydextrose, glycerine (glycerol), potassium lactate, sodium lactate, phosphoric acid, disodium dihydrogen pyrophosphate, tetrasodium pyrophosphate, calcium dihydrogen phosphate, potassium dihydrogen phosphate, diammonium hydrogen phosphate, dipotassium hydrogen phosphate, calcium hydrogen phosphate (dicalcium orthophosphate), tricalcium orthophosphate(calcium phosphate), tripotassium orthophosphate, trisodium orthophosphate, sodium polyphosphate, sodium tripolyphosphate, sodium dihydrogen phosphate, sodium phosphatedibasic, tetrapotassium pyrophosphate, trisodium monohydrogen diphosphate, potassium polymetaphosphate, calcium acid pyrophosphate, and mixtures thereof.

By "anticaking agents" it is herein understood substances used for preventing granulated or powdered food from agglomerating and keeping it loose or free flow.

By "antioxidants" it is herein understood substances that can prevent or postpone oxidative cleavage or deterioration of oil or food ingredients and increase the food stability.

Examples of antioxidants comprise, but are not limited to, D-isoascorbic acid (erythorbic acid), sodium D-isoascorbate, ascorbic acid, sodium ascorbate, calcium ascorbate, phospholipids, sodium lactate, and mixtures thereof.

By "hydrocolloids" it is herein understood substances that form viscous paste or gel when they are in contact with water.

By "nutrient enhancers" it is herein understood natural or synthetic substances added to increase the nutritional content (value) of food.

Examples of a nutrient enhancers comprise, but are not limited to, calcium carbonate, calcium gluconate, calcium citrate, calcium lactate, calcium hydrogen phosphate, calcium L-threonate, calcium glycinate, calcium aspartate, calcium citrate malate, calcium acetate, calcium chloride, tricalcium orthophosphate (calcium phosphate), vitamin E succinate calcium, calcium glycerophosphate, calcium oxide, calcium sulfate, bone meal (ultra-fine fresh bone meal), resistant dextrin, and mixtures thereof.

By "bulking agents" it is herein understood substances that contribute to the bulk of a food product.

Examples of bulking agents comprise, but are not limited to, maltitol and maltitol syrup, polydextrose, resistant dextrin, hydroxypropyl starch, sodium lactate, calcium carbonate, ammonium hydrogen carbonate, sodium hydrogen carbonate, phosphoric acid, disodium dihydrogen pyrophosphate, tetrasodium pyrophosphate, calcium dihydrogen phosphate, potassium dihydrogen phosphate, diammonium hydrogen phosphate, dipotassium hydrogen phosphate, calcium hydrogen phosphate (dicalcium orthophosphate), tricalcium orthophosphate(calcium phosphate), tripotassium orthophosphate, trisodium orthophosphate, sodium polyphosphate, sodium tripolyphosphate, sodium dihydrogen phosphate, sodium phosphatedibasic, tetrapotassium pyrophosphate, trisodium monohydrogen diphosphate, potassium polymetaphosphate, calcium acid pyrophosphate, and mixtures thereof.

The dairy product may also comprise other additives such as potassium chloride, galactomannan, nitrogen, and mixtures thereof.

In a particular embodiment, the dairy product of the present invention comprises from 0% to 8%, preferably from 0.01% to 5% and more preferably from 0.1% to 3% by weight of additives with respect to the total weight of the dairy product.

In a particular embodiment, the dairy product of the present invention comprises:

- more than 70%, preferably more than 80%, more preferably more than 90%, and even more preferably between 90% and 95% of milk by weight,
- from 0 to 30%, preferably from 3 to 20% and more preferably from 5 to 10% of sugars by weight,
- from 0.05% to 10%, preferably from 0.1% to 5% and more preferably from 0.5% to 2% of starch or starch mixture by weight,
- optionally, from 0% to 1%, preferably from 0.0001% to 0.05% and more preferably from 0.001% to 0.005% of starter culture by weight,
- optionally, from 0% to 10%, preferably from 0.01% to 5% and more preferably from 0.1% to 3% of whey protein and/or other sources of protein by weight,
- optionally, from 0% to 20%, preferably from 0.01% to 10% and more preferably from 0.1% to 5% of water by weight,
- optionally, from 0% to 8%, preferably from 0.01% to 5% and more preferably from 0.1% to 3% of additives (including acidity regulators, preservatives, emulsifiers, colorants, sweeteners, flavor enhancers, flavoring substances, humectants, anticaking agents, antioxidants, hydrocolloids, nutrient enhancers, bulking agents, and mixtures thereof) by weight.

In a particular embodiment, the dairy product of the present invention is selected from the group comprising milk, butter, cultured milk (including but not limited to cheese, yogurt, sour cream, and kefir cream) and ice cream, preferably the dairy product is a yogurt.

In a particular embodiment, the starch mixture is used as a texturing agent, a gelling agent, a thickening agent, a creaming agent and/or as a stabilizing agent.

A second object of the present invention is a process of fabricating the dairy product of the present invention, comprising the steps of:

(a) Mixing all ingredients used for preparing the dairy product for 5 to 60 minutes, preferably for 15 to 45 minutes, and more preferably for approximately 30 minutes,

(b) Preheating the mixture obtained in step (a) to a temperature comprised between 50°C and 100°C, preferably between 60°C and 80°C, and more preferably to approximately 65°C,

(c) Heating the preheated mixture obtained in step (b) at a temperature comprised between 60°C and 145°C for 1 second to 60 minutes, preferably at a temperature comprised between 80°C and 120°C for 1 to 30 minutes, and more preferably at approximately 95°C for approximately 5 minutes,

(d) Cooling the heated mixture obtained in step (c) and optionally adding a starter culture,

(e) Fermenting the cooled mixture which optionally comprises the started culture obtained in step (d) at a temperature comprised between 4°C and 60°C, preferably between 20°C and 50°C and more preferably at approximately 43°C until the mixture has a pH comprised between 3 and 5, preferably between 3.5 and 4.8, and more preferably a pH of 4.6,

(f) Smoothing the fermented mixture obtained in step (e) with a homogenizer, and

(g) Packing the smooth mixture obtained in step (f).

In a particular embodiment, in step (e) the fermentation last from 3 hours to 24 hours, preferably from 4 hours to 12 hours and more preferably about 5 to 6 hours.

In the present invention, the starch mixture is a combination of native starches which have not been chemically, enzymatically, or physically modified after being extracted and can thus be classified as clean labelled ingredients.

The present invention thus enables the preparation of a dairy product, using only food ingredients, without the use of hazardous chemicals.

The starch mixture of the present invention can be used in the same applications where chemically modified starches are conventionally used.

The starch mixture of the present invention can be used as alternative or substitute for chemically modified starches where severe acid and/or heat and/or shear conditions exist or are applied.

Another object of the present invention is the use of a starch mixture of the present invention to replace chemically, enzymatically, or physically modified starches for the production of a dairy product.

Another object of the present invention is the use of the starch mixture of the present invention as a texturing agent, a gelling agent, a thickening agent, as a creaming agent and/or as a stabilizing agent for the production of a dairy product.

The invention will now be illustrated by means of the following figures and examples.

**Brief description of the drawings:**

Figure 1: Rapid Viscosity Analysis (RVA) results of buckwheat starch and waxy maize starch mixtures

Figure 2 RVA results of buckwheat starch and tapioca starch mixtures

Figure 3 RVA results of buckwheat starch and potato starch mixtures

Figure 4 RVA results of buckwheat starch and sweet potato starch mixtures

Figure 5 RVA results of buckwheat starch and waxy rice starch mixtures

Figure 6 RVA results of buckwheat starches and potato starch mixtures

Figure 7 Syneresis test of buckwheat starches and buckwheat-potato starch mixtures

Figure 8: Appearance of yogurt samples after 30-day cold storage

Figure 9: Appearance of starch granules in yogurt samples after 30-day cold storage

**EXAMPLES**

In the following examples, the following commercial products are used:

- Native waxy maize starch commercialized by Roquette
- Native tapioca starch obtained from a local grocery store
- Native potato starch commercialized by Roquette
- Native sweet potato starch obtained from a local grocery store

- Native waxy rice starch produced by Wuxi Jingnong Biotechnology Co. Ltd.
- Modified Starch Clearam CJ 5025 commercialized by Roquette
- Modified Starch Clearam CR 4015 commercialized by Roquette
- Milk from Bright Dairy was purchased from a local grocery store
- Functional clean label waxy maize starch Novation 2300 commercialized by Ingredion
- Functional clean label waxy maize starch Claria+ commercialized by Tate & Lyle

Native buckwheat starch batch 1 (BWS1) was produced according to the first extraction process of buckwheat starch described in the description.

Native buckwheat starch batch 2 (BWS2) was produced according to the second extraction process of buckwheat starch described in the description.

## Example 1: Pasting properties of buckwheat starch mixed with other starches

Each starch or starch mixture sample (2 g, dry weight basis) to analyze, presented in table 1 below, was mixed with water to a final total weight of 25 g (8% starch suspension) in an aluminum canister.

Table 1

| Test 1 (waxy maize starch) | Test 2 (tapioca starch) | Test 3 (potato starch) | Test 4 (sweet potato starch) | Test 5 (waxy rice starch) |
|---|---|---|---|---|
| | | | | |
| 100% Buckwheat starch BWS1 | 100% Buckwheat starch BWS1 | 100% Buckwheat starch BWS1 | 100% Buckwheat starch BWS1 | 100% Buckwheat starch BWS1 |
| Mixture: 10% waxy maize starch and 90% buckwheat starch BWS1 | Mixture: 10% tapioca - 90% buckwheat starch BWS1 | Mixture: 10% pota-to starch and 90% buckwheat starch BWS1 | Mixture: 10% sweet potato starch and 90% buckwheat starch BWS1 | Mixture:10% waxy rice starch and 90% buckwheat BWS1 |
| Mixture: 25% waxy maize starch and 75% buckwheat starch BWS1 | Mixture: 25% tapioca starch and 75% buckwheat starch BWS1 | Mixture: 25% pota-to starch and 75% buckwheat starch BWS1 | Mixture: 25% sweet potato starch and 75% buckwheat starch BWS1 | Mixture: 25% waxy rice starch and 75% buckwheat starch BWS1 |
| Mixture: 50% waxy maize starch and 50% buckwheat starch BWS1 | Mixture: 50% tapioca starch and 50% buckwheat starch BWS1 | Mixture: 50% pota-to starch and 50% buckwheat starch BWS1 | Mixture: 50% sweet potato starch and 50% buckwheat starch BWS1 | Mixture: 50% waxy rice starch and 50% buckwheat starch BWS1 |
| 100% waxy maize starch | 100% tapioca starch | 100% potato starch | 100% sweet potato | 100% waxy rice |
| Modified Starch Clearam CR4015 | | | | |
| Modified Starch Clearam CJ5025 | | | | |

Then, each sample to analyze was heated using a Rapid Visco Analyser (RVA 4500, Perten Instruments) according to the heating profile presented in table 2 while measuring viscosity and pasting temperature.

Table 2

| Time | Temperature (°C) | Shearing speed (rpm) |
|---|---|---|
| 00:00:00 | 50 | 960 |
| 00:00:10 | 50 | 160 |
| 00:01:00 | 50 | 160 |
| 00:04:45 | 95 | 160 |

(continued)

| Time | Temperature (°C) | Shearing speed (rpm) |
|---|---|---|
| 00:07:15 | 95 | 160 |
| 00:11:00 | 50 | 160 |
| 00:13:00 | 50 | 160 |

Pasting temperature is the temperature at which the viscosity starts to increase, identified by viscosity increase by more than 24 cP within 0.1 min.

Peak viscosity is the highest viscosity during heating and holding at 95°C, trough is the lowest viscosity during holding at 95°C, final viscosity is the highest viscosity during cooling and holding at 50°C, breakdown is the difference between peak viscosity and trough, and setback is the difference between final viscosity and trough.

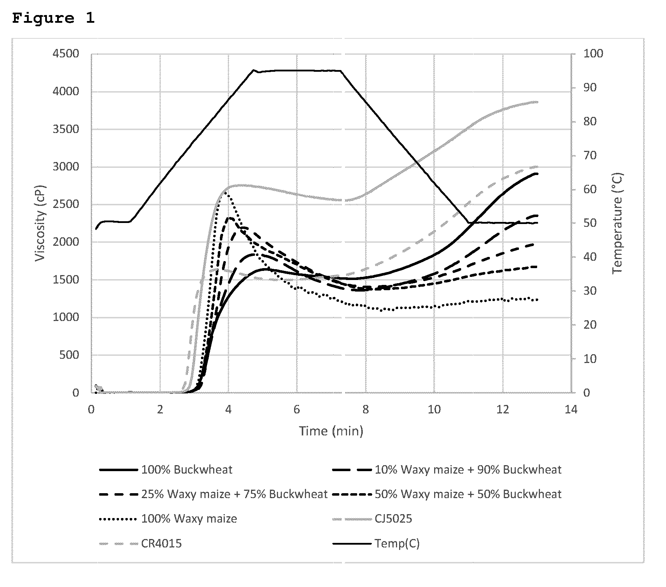

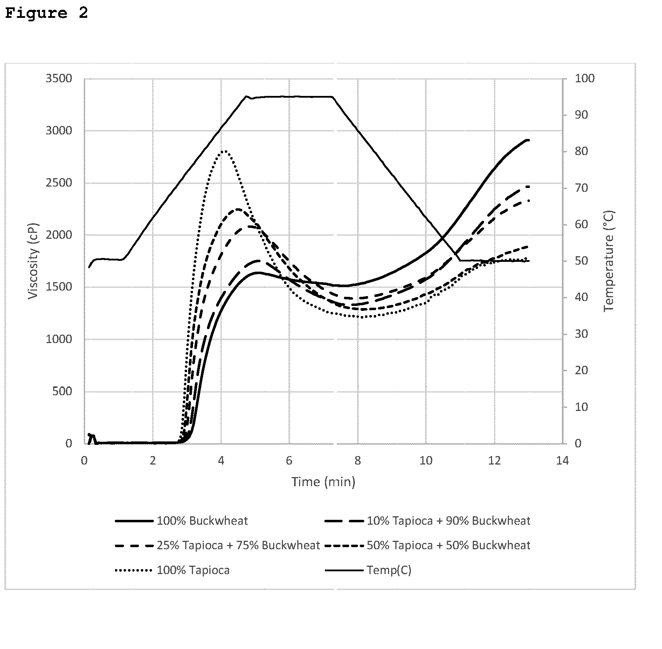

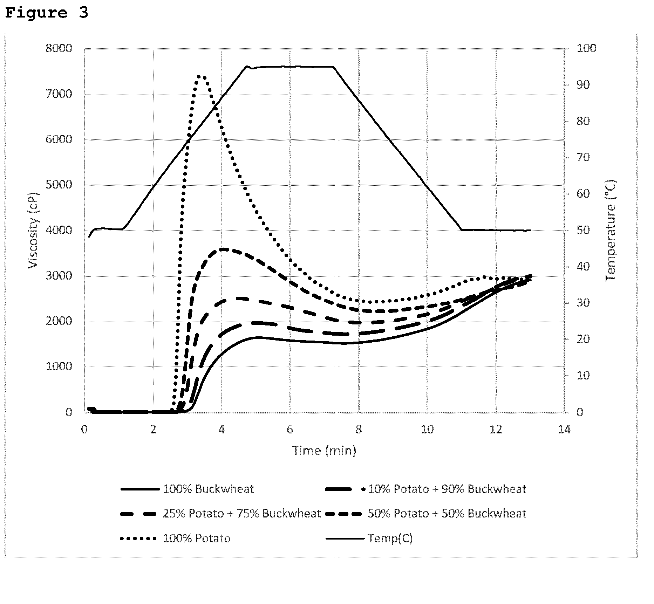

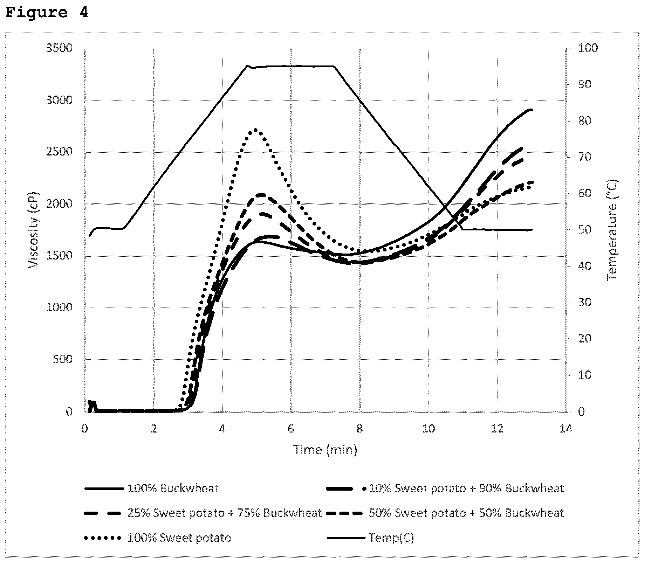

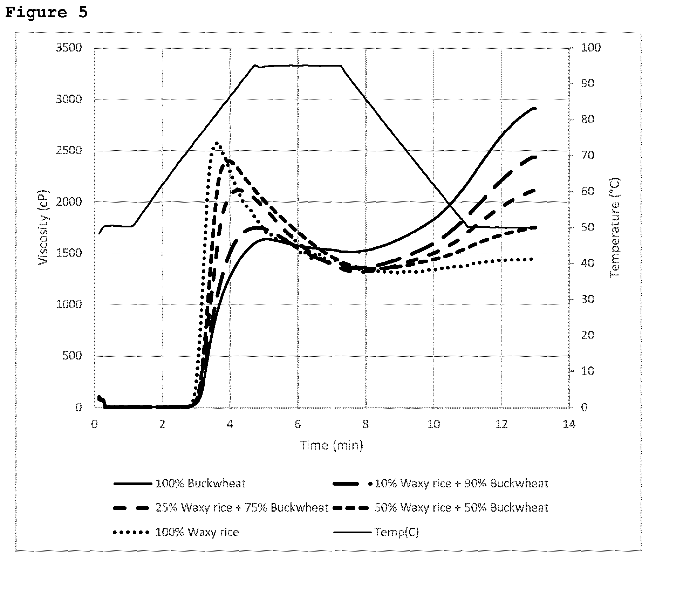

Results are shown on figures 1 to 5 respectively and on table 3.

Table 3

| Starch or Starch mixture | Pasting temperature (°C) | Peak viscosity (cP) | Trough (cP) | Break down (cP) | Final viscosity (cP) | Set back (cP) |
|---|---|---|---|---|---|---|
| 100% Buckwheat | 74.35 | 1636 | 1510 | 126 | 2908 | 1398 |
| | | | | | | |
| 10% Waxy maize + 90% Buckwheat | 75 | 1835 | 1359 | 476 | 2349 | 990 |
| 25% Waxy maize + 75% Buckwheat | 75.05 | 2190 | 1402 | 788 | 1969 | 567 |
| 50% Waxy maize + 50% Buckwheat | 74.3 | 2335 | 1370 | 965 | 1670 | 300 |
| 100% Waxy maize | 73.6 | 2671 | 1086 | 1585 | 1234 | 148 |
| 100%CJ5025 | 71.0 | 2756 | 2553 | 203 | 3862 | 1309 |
| 100%CR4015 | 69.45 | 1635 | 1504 | 131 | 3002 | 1498 |
| | | | | | | |
| 10% Tapioca + 90% Buckwheat | 73.45 | 1751 | 1327 | 424 | 2464 | 1137 |
| 25% Tapioca + 75% Buckwheat | 72.6 | 2082 | 1390 | 692 | 2332 | 942 |
| 50% Tapioca + 50% Buckwheat | 71.9 | 2245 | 1284 | 961 | 1884 | 600 |
| 100% Tapioca | 71 | 2805 | 1207 | 1598 | 1772 | 565 |
| | | | | | | |
| 10% Potato + 90% Buckwheat | 72.65 | 1957 | 1711 | 246 | 3005 | 1294 |
| 25% Potato + 75% Buckwheat | 70.3 | 2504 | 1963 | 541 | 2982 | 1019 |
| 50% Potato + 50% Buckwheat | 69.25 | 3584 | 2212 | 1372 | 2856 | 644 |
| 100% Potato | 67.8 | 7386 | 2423 | 4963 | 2905 | 482 |
| | | | | | | |
| 10% Sweet potato + 90% Buckwheat | 74.2 | 1686 | 1433 | 253 | 2575 | 1142 |
| 25% Sweet potato + 75% Buckwheat | 73.5 | 1903 | 1426 | 477 | 2455 | 1029 |
| 50% Sweet potato + 50% Buckwheat | 72.7 | 2086 | 1438 | 648 | 2207 | 769 |
| 100% Sweet potato | 70.1 | 2715 | 1546 | 1169 | 2159 | 613 |
| | | | | | | |
| 10% Waxy rice + 90% Buckwheat | 73.45 | 1748 | 1354 | 394 | 2435 | 1081 |
| 25% Waxy rice + 75% Buckwheat | 72.55 | 2115 | 1317 | 798 | 2108 | 791 |
| 50% Waxy rice + 50% Buckwheat | 73.45 | 2395 | 1347 | 1048 | 1749 | 402 |

(continued)

| Starch or Starch mixture | Pastin g temper ature (°C) | Peak visco sity (cP) | Tro ugh (cP ) | Break down (cP) | Final visco sity (cP) | Set bac k (cP ) |
|---|---|---|---|---|---|---|
| 100% Waxy rice | 71.9 | 2576 | 130 9 | 1267 | 1439 | 130 |

Conclusion: Native starch is a natural clean label starch that can be used as a viscosity modifier. However, most native starches are not stable especially during shearing (thin shearing) and cold storage (starch retrogradation). Buckwheat starch had higher pasting temperature and smaller breakdown than all native starches tested here, i.e. than 100% waxy maize starch, 100% tapioca starch, 100% potato starch, 100% sweet potato starch and 100% waxy rice starch, indicating that buckwheat starch is more heat and shear resistant than other native starches.

The low peak viscosity of buckwheat starch indicates that buckwheat starch granules were not completely swollen during heating, such as during sterilization/pasteurization process in yogurt processing. Thus, native buckwheat starch can be mixed with another native starch. The latter (the other native starch) can provide the continuous phase to stabilize the emulsion and the partially swollen buckwheat starch granules, and the former (native buckwheat starch) serves as heat-resistant filler that can modify the texture of food product and prevent syneresis.

A small amount of the other native starch (up to 25%) did not affect the heat and shear resistance and the low rate of retrogradation of buckwheat starch. However, except for potato starch, buckwheat starch had higher final viscosity during cooling than other native starches. Thus, it seems that potato starch can be used to stabilize the partially swollen buckwheat starch granules in a dairy product without obvious effects on the viscosity of buckwheat starch. In addition, the mixtures of buckwheat starch with sweet potato starch and with tapioca starch only exhibited small decreases in the final viscosity of buckwheat starch, which might also have good potentials to stabilize the partially swollen buckwheat starch granules.

## Example 2: Properties of buckwheat starch and potato starch mixture

The gelatinization properties, pasting properties and syneresis were studied for the following samples:

- Native buckwheat starch Batch 1 (called BWS1)
- Native buckwheat starch Batch 2 (called BWS2)
- Native potato starch (called PS)
- Mixture: 10% potato starch (called PS) with 90% buckwheat starch Batch 1 (called BWS1)
- Mixture: 25% potato starch (called PS) with 75% buckwheat starch Batch 1 (called BWS1)
- Mixture: 10% potato starch (called PS) with 90% buckwheat starch Batch 2 (called BWS2)
- Mixture: 25% potato starch (called PS) with 75% buckwheat starch Batch 2 (called BWS2)

Starch gelatinization is the melting or the disruption of starch native crystalline structure, such as by heat, pressure, shear and chemicals. After gelatinization in excess of water, native starch granules lose their granular structure and become starch paste. During storage, especially at refrigerated temperature, starch paste recrystallizes, which is known as retrogradation. The extent of retrogradation depends on many factors, such as the type of starch, moisture content, and storage temperature. The crystalline structure in the retrograded starch can be melted (or partially melted) by similar processes as in starch gelatinization, such as by heat, pressure, shear and chemicals.

Gelatinization properties of each sample were measured by Differential Scanning Calorimetry (DSC 1, Mettler Toledo) according to the following protocol.

Each starch sample (2-3 mg, dry weight basis) to analyze was mixed with water at a weight ratio of starch to water of 1:3. The mixture was sealed in a standard 40 $\mu$L aluminum pan and allowed to equilibrate for at least an hour. The pan was then equilibrated again in the DSC at 10°C for 1 min followed by heating to 100°C at 10°C/min.

Onset temperature ($T_o$), peak temperature ($T_p$), end temperature ($T_c$) and enthalpy change were obtained using the software provided by Mettler Toledo (STARe system). The enthalpy change of starch gelatinization was obtained based on the area under the curve. After the gelatinization test, the pans were stored in a refrigerator for 7 days and reanalyzed using the same heating conditions to obtain the retrogradation properties of starch samples based on the endotherm related to the melting of the retrograded starch.

The rate of retrogradation is the enthalpy change of the melting of retrograded starch divided by the enthalpy change of starch gelatinization.

Results are shown in table 4 below.

Table 4

| Sample | Gelatinization | | | | Melting of retrograded starch | | | | Rate of Retrogra dation |
|---|---|---|---|---|---|---|---|---|---|
| | $T_o$ (°C) | $T_p$ (°C) | $T_c$ (°C) | ΔH (J/g) | $T_o$ (°C) | $T_p$ (°C) | $T_c$ (°C) | ΔH (J/g) | |
| BWS1 | 61. 7 | 68. 0 | 74. 3 | 9.61 | 42. 2 | 50. 4 | 61. 9 | 0.29 | 33.60% |
| BWS1+10 %PS | 60. 9 | 67. 0 | 74. 1 | 12.0 5 | 41. 5 | 52. 0 | 63. 6 | 0.22 | 25.40% |
| BWS1+25 %PS | 60. 8 | 66. 2 | 74. 1 | 9.59 | 42. 8 | 52. 6 | 66. 1 | 0.31 | 35.55% |
| BWS2 | 63. 6 | 67. 3 | 72. 6 | 11.0 2 | 43. 1 | 52. 3 | 61. 4 | 0.20 | 20.85% |
| BWS2+10 %PS | 62. 8 | 67. 0 | 71. 7 | 9.81 | 42. 0 | 51. 8 | 62. 4 | 0.29 | 31.34% |
| BWS2+25 %PS | 60. 9 | 66. 3 | 71. 4 | 10.9 0 | 41. 4 | 51. 6 | 65. 0 | 0.28 | 30.94% |
| Potato starch | 61. 1 | 65. 1 | 70. 2 | 11.6 3 | 44. 0 | 58. 8 | 68. 8 | 0.33 | 39.63% |

This analysis aimed to study the effect of mixing potato starch with buckwheat starch on the gelatinization and retrogradation properties of buckwheat starch. Buckwheat starch has a good stability against retrogradation, and the addition of potato starch should not have an effect on the low rate of retrogradation of buckwheat starch when the starch mixture is used in a dairy product in order to have a good and stable texture, especially upon cold storage.

As shown in table 4, there were no obvious differences between 100% native buckwheat starch (BWS1 and BWS2) and buckwheat starch mixtures in term of the gelatinization temperature and melting temperature of retrograded starch. Native buckwheat starch (100%, BWS1 and BWS2) and buckwheat starch mixtures showed low rates of retrogradation (20-36%).

Potato starch had slightly lower gelatinization temperature ($T_p$ and $T_c$), but slightly higher melting temperature of retrograded starch and higher rate of retrogradation.

The results indicate that a small amount of potato starch (up to 25% by weight) in buckwheat starch has no large effects on the gelatinization and retrogradation properties of buckwheat starch.

Pasting properties of each sample were measured by Rapid Viscosity Analyzer (RVA 4500, Perten Instruments) according to the following protocol. Each starch sample (1.5 g, dry weight basis) to analyze were mixed with water to a final total weight of 30 g (5% starch suspension) in an aluminum canister. Then, each sample to analyze was heated according to the heating profile presented in table 2 of example 1.

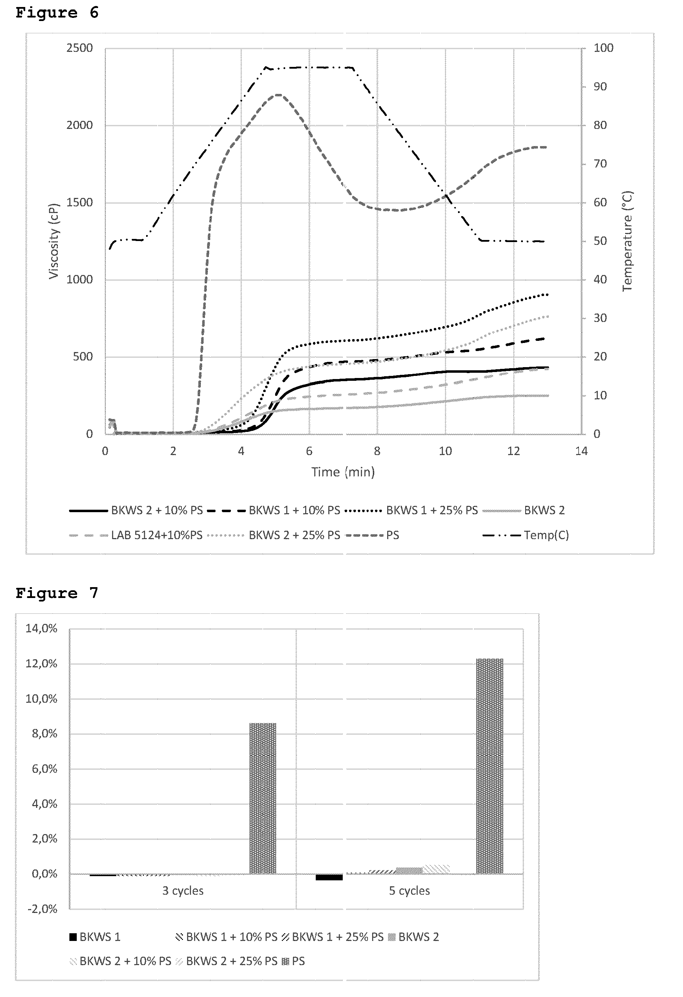

Results are shown on figure 6 and in table 5.

Table 5

| Sample | Pasting temperat ure (°C) | Peak viscos ity (cP) | Trough (cP) | Breakd own (cP) | Final viscos ity (cP) | Setbac k (cP) |
|---|---|---|---|---|---|---|
| BWS1 | 72 | 171 | 166 | 5 | 252 | 86 |
| BWS1+10%PS | 71.5 | 256.5 | 244.5 | 12 | 422.5 | 178 |
| BWS1+25%PS | 70.5 | 454.5 | 440 | 14.5 | 761.5 | 321.5 |
| BWS2 | 84 | 349.5 | 325.5 | 24 | 432 | 106.5 |
| BWS2+10%PS | 83 | 467.5 | 438 | 29.5 | 618 | 180 |
| BWS2+25%PS | 70.5 | 603.5 | 585 | 18.5 | 902.5 | 317.5 |
| Potato starch | 69.0 | 2216.5 | 1446.5 | 770 | 1859 | 412.5 |

This analysis aimed to study the effect of mixing potato starch with buckwheat starch on the pasting properties (including paste viscosity) of buckwheat starch. The addition of potato starch should not show any significant decreases in the peak and final viscosities.

As shown on figure 6 and in table 5, potato starch has much higher viscosity than 100% native buckwheat starches (BWS1 and BWS2) and buckwheat mixtures. The addition of 10% and 25% potato starch showed an obvious increase of the viscosity in comparison to buckwheat starch alone (BWS1 and BWS2), and thus 10% to 25% potato starch can be used to provide the continuous phase to stabilize the partially swollen buckwheat starch granules.

The degree of syneresis of each starch sample was measured according to the following protocol. Each starch paste obtained after complete gelatinization during the RVA test was divided into three tared 15-mL centrifuge tubes. The tubes were frozen at -20°C for 20 hours, and then thawed at 30°C for 4 hours. The freezing and thawing were repeated for 5 cycles (i.e. 5 days). At the third and fifth cycles, one tube from each sample was centrifuged at 3000 × g for 20 min after being thawed. The water phase was removed and the gel phase was weighed. The degree of syneresis was calculated according to the following equation:

$$\% \ \texttt{Syneresis} \ = \ (w_i - w_f)/w_i * 100\%$$

where $w_i$ = initial weight of the gel prior to the freezing-thawing treatment, and
$w_f$ = final weight of the gel after thawing and removal of water phase.

Results are shown on figure 7.

This analysis aimed to study the effect of mixing potato starch with buckwheat starch on the stability of buckwheat starch paste. The less water is released after freezing-thawing cycle and centrifugation, the more stable the texture of the paste is.

As shown on figure 7, pure native buckwheat starches (BWS1 and BWS2) and buckwheat starch mixtures showed no syneresis after three cycles of freezing and thawing, and only a small syneresis (<1%) after five cycles. By contrast, native potato starch showed obvious syneresis after the third and fifth cycles (>8%). The results indicate that a small amount of potato starch (up to 25% by weight) in buckwheat starch has no large effects on the stability of buckwheat starch paste.

Conclusion: The additions of 10% and 25% potato starch did not decrease the viscosity of buckwheat starches (BWS1 and BWS2), while maintaining the shear resistance and the thermal properties of buckwheat starches. Furthermore, 100% buckwheat starches (BWS1 and BWS2) and their mixtures with potato starch showed low rate of retrogradation detected by DSC (20-36%) and low degree of syneresis after five cycles of freezing and thawing (<1%). Thus, a small amount of potato starch can be used to provide the continuous phase to stabilize the partially swollen buckwheat starch granules as viscosity modifier.

**Example 3: Properties of yogurt made with buckwheat starch or buckwheat and potato starch mixture in comparison to other clean label starches and chemically modified starch.**

Seven yogurt samples were made respectively with:

- Buckwheat starch Batch 1 (called BSW1),
- Buckwheat starch Batch 2 (called BSW2),
- Mixture of 90% buckwheat starch BSW1 with 10% of potato starch (called BSW1-PS)
- Mixture of 90% buckwheat starch BSW2 with 10% of potato starch (called BWS2-PS)
- Chemically modified waxy maize starch Clearam CJ 5025,
- Functional clean label waxy maize starch Novation 2300,
- Functional clean label waxy maize starch Claria+

Buckwheat starch Batch 1 was extracted from buckwheat groat using first extraction process of buckwheat starch described in the description.

Buckwheat starch Batch 2 was extracted from buckwheat groat using second extraction process of buckwheat starch described in the description.

The yogurts were prepared according to the following recipe and procedure:

(a) Mixing all ingredients (91.5% milk, 7.5% sucrose, and 1% starch) for 30 min,
(b) Preheating to 65°C the mixture obtained in step (a),
(c) Heating the preheated mixture obtained in step (b) at 95°C for 5 min,
(d) Cooling the heated mixture obtained in step (c) to 43°C and adding yogurt starter culture (0.03 g/kg milk),
(e) Fermenting the cooled mixture comprising the yogurt starter culture at 43°C until the mixture reached a pH of 4.6 (about 5 to 6 hours),
(f) Smoothing the fermented mixture obtained in step (e) with a homogenizer,
(g) Packing the smooth mixture obtained in step (f).

One control yogurt was made without native or modified starch.

For each sample, appearance, microscopy, apparent viscosity and particle size were evaluated.

Apparent viscosity (sometimes denoted η) is a rheological property. The apparent viscosity is equal to the shear stress applied to a fluid divided by the shear rate. It is a measurement for resistance to flow.

The appearance, such as lump formation, smoothness, and glossiness, was analyzed from the picture taken after 30-day cold storage.

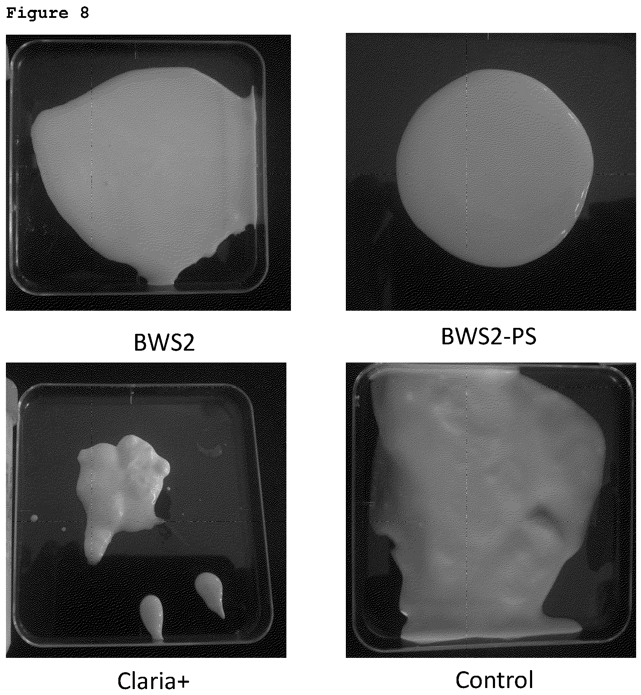

Results are shown on figure 8

It was expected that the addition of starch prevents the lump formation and maintains the smoothness and glossiness of yogurt, especially for drinking yogurt. After 30-day cold storage, big lumps were visible in yogurt made with Claria+ and control yogurt sample, whereas those made with buckwheat starch and the mixture of buckwheat and potato starches remained smooth and had glossy appearances.

The structure of the starch granules in yoghurt sample was analysed by optical microscopy.

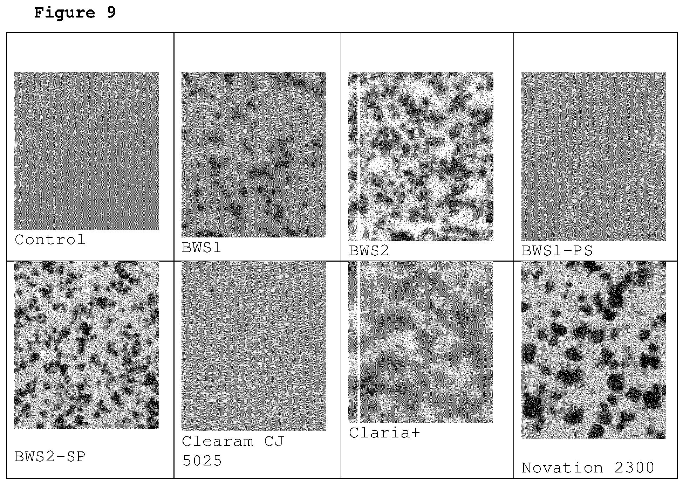

Results are shown on figure 9

Starch granules in yogurt must be able to withstand high temperature and high shear rate. Thus, the granular structure should not be easily broken. Furthermore, small granule size provides smooth texture with low viscosity that is ideal for drinking yogurt.

From microscopy, the starch granules were visible in all yogurt samples after processing (including heating and fermentation), except in the yogurt sample made with Clearam CJ 5025, which showed many broken granules. The starch granules of Claria+ and Novation 2300 were swollen (bigger particle size), whereas the buckwheat starches granules remained small and intact after yogurt processing. This indicates that the buckwheat starch had stronger resistance towards heat and shear. It should be noted that potato starch was only accounted for 10% of the starch mixture, and its appearance was not clearly visible in the yogurt samples containing the starch mixtures.

The apparent viscosity was analysed using Brookfield viscometer with No. 29 spindle at 60 rpm for 15 seconds.

Results are shown in table 8

Table 8

| Samples | | Viscosity of the yogurt (mPa·s) | Differences |
|---|---|---|---|
| | Day 1 after cold storage | Day 30 after cold storage | |
| Control | 1741 ± 31.48 | 1400 | 19.6% decrease |
| BWS1 | 1567 ± 18.84 | 1433 | 8.5% decrease |
| BWS2 | 1309 ± 38.76 | 1000 | 23.6% decrease |
| BWS1-PS | 1071 ± 40.92 | 1033 | 3.5% decrease |
| BWS2-PS | 1120 ± 2.45 | 933.3 | 16.7% decrease |
| Clearam CJ 5025 | 1211 ± 18.01 | 1333 | 10% increase |
| Claria+ | 2273 ± 9.74 | 3150 | 38% increase |
| Novation 2300 | 1363 ± 17.75 | 1267 | 7.0% decrease |

This analysis aimed to study the viscosity of yogurt with the addition of starch after cold storage. The 1-day after cold storage was considered as the fresh yogurt, and the apparent viscosity difference between the 1- and 30-day cold storage showed the stability of the viscosity upon cold storage. In addition, these results can be used to decide what type of yogurt (such as spoonable and drinking yogurts) can be made from adding the starch to the yogurt.

Yogurt sample with Claria+ had the highest viscosity after 1- and 30-day cold storage. Other yogurt samples had lower viscosity than the control. The high viscosity of control yogurt was most likely due to lump formation. Yogurt samples with buckwheat starches alone (BWS1 and BWS2) had similar viscosity to those with Clearam CJ 5025 and Novation 2300, whereas that with the buckwheat and potato starch mixture had the lowest viscosity in comparison to the other samples, which is suitable for drinking yogurt. The apparent viscosity difference between the 1- and 30-day cold storage was smaller for the yogurt made with buckwheat and potato starch mixture than that made with the same buckwheat starch alone, indicating that potato starch could further stabilizes the viscosity of yogurt made with buckwheat starch upon cold storage. In addition, the yogurt sample with Claria+ had the largest apparent viscosity difference between the 1- and 30-day cold storage, indicating the instability of the viscosity of this yogurt sample.

Particle size of the yogurt resulting from starch granules, emulsion droplets, aggregates, or agglomerates in the yogurt, was determined by a laser particle size analyzer (S3500, Microtrac, USA).

Results are shown on table 9 below.

Table 9

| Sample | Particle size ($\mu$m) | | |
|---|---|---|---|
| | 10th percentile | 50th percentile | 90th percentile |
| Control | 15.21 $\pm$ 0.57 | 39.08 $\pm$ 0.60 | 102.80 $\pm$ 0.90 |
| BWS1 | 11.41 $\pm$ 0.42 | 22.50 $\pm$ 0.53 | 55.94 $\pm$ 2.97 |
| BWS2 | 11.99 $\pm$ 0.37 | 24.47 $\pm$ 1.18 | 54.04 $\pm$ 0.22 |
| BWS1-PS | 11.14 $\pm$ 0.23 | 22.83 $\pm$ 0.13 | 50.50 $\pm$ 0.52 |
| BWS2-PS | 9.87 $\pm$ 0.01 | 19.36 $\pm$ 0.32 | 39.83 $\pm$ 1.92 |
| Clearam CJ 5025 | 10.54 $\pm$ 0.03 | 22.41 $\pm$ 0.29 | 49.10 $\pm$ 1.71 |
| Claria+ | 19.79 $\pm$ 0.36 | 44.60 $\pm$ 1.15 | 76.34 $\pm$ 2.42 |
| Novation 2300 | 14.58 $\pm$ 0.33 | 34.82 $\pm$ 0.55 | 55.79 $\pm$ 0.24 |

This analysis aimed to measure the size of particles in the yogurt, which could arise from swollen starch granules, protein aggregates, and/or any agglomerates. It can also be used to determine if there was lump formation and/or large particles in the yogurt. Large particles can also be perceived as sandiness texture by consumers. Large particles and lump formation should be avoided to provide smooth texture of yogurt, especially for drinking yogurt.

Buckwheat starch granules, either present alone or as a mixture with potato starch (BWS1, BWS2, BWS1-PS and BWS2-PS), were less swollen, and the particle sizes were smaller than control and other clean label starches (Claria+ and Novation 2300). This means that buckwheat starches (BWS1, BWS2, BWS1-PS and BWS2-PS) had lower level of sandiness and lumping texture, which improved the sensory of the yogurt system. Clearam CJ 5025 had similar small particle size as buckwheat starch, most probably due to the broken granules of Clearam CJ 5025 in the yogurt sample.

Conclusion:

Buckwheat starches (BWS1, BWS2, BWS1-PS and BWS2-PS) can prevent lump formation and provide small particles in yogurt during production and upon cold storage. A small addition of potato starch to buckwheat starch further reduced the particle size and lump formation, resulting in an improved texture with slightly lowered viscosity, which is ideal for drinking yogurt. A small addition of potato starch also reduced the changes in the viscosity of yogurt made with buckwheat starch during cold storage, which is important for stability of chilled drinking yogurt. Buckwheat starch or a mixture of buckwheat and potato starches can be used to replace chemically modified starches in dairy products.

**Claims**

1. Dairy product comprising more than 70% of milk by weight with respect to the total weight of the dairy product, and a starch mixture, the starch mixture consisting of:

   (a) a native buckwheat starch, and
   (b) optionally a second native starch selected from the group consisting of waxy maize starch, maize starch, tapioca starch, waxy tapioca starch, potato starch, waxy potato starch, sweet potato starch, waxy sweet potato starch, rice starch, waxy rice starch, millet starch, amaranth starch, arrowroot starch, lotus root starch, quinoa starch, and mixtures thereof, preferably potato starch, tapioca starch or sweet potato starch.

2. Dairy product according to claim 1, wherein the native buckwheat starch represents from 50 to 100%, preferably from 75 to 100% and more preferably from 90 to 100% by weight with respect to the total weight of the starch mixture, and the second native starch represents from 0 to 50%, preferably from 0 to 25% and more preferably from 0 to 10% by weight with respect to the total weight of the starch mixture.

3. Dairy product according to claim 1 or 2, wherein the starch mixture represents from 0.05% to 10%, preferably from 0.1% to 5% and more preferably from 0.5% to 2% by weight with respect to the total weight of the dairy product.

4. Dairy product according to anyone of claims 1 to 3, wherein the starch mixture has a peak viscosity ranging from 1500 to 4200 cP, preferably from 1800 cP to 4000 cP and more preferably from 2200 cP to 3800 cP, when heated up to 95°C at 8% suspension using Rapid Viscosity Analysis (RVA).

5.  Dairy product according to anyone of claims 1 to 4, wherein the starch mixture has a pasting temperature ranging from 65°C to 85°C, preferably from 68°C to 80°C and more preferably from 70°C to 75°C.

6.  Dairy product according to anyone of claims 1 to 5, wherein the dairy product further comprises

    - more than 80%, more preferably more than 90%, and even more preferably between 90% and 95% of milk by weight,
    - from 0 to 30%, preferably from 3 to 20% and more preferably from 5 to 10% of sugars by weight,
    - from 0.05% to 10%, preferably from 0.1% to 5% and more preferably from 0.5% to 2% of starch or starch mixture by weight,
    - optionally, from 0% to 1%, preferably from 0.0001% to 0.05% and more preferably from 0.001% to 0.005% of starter culture by weight,
    - optionally, from 0% to 10%, preferably from 0.01% to 5% and more preferably from 0.1% to 3% of whey protein and/or other sources of protein by weight,
    - optionally, from 0% to 20%, preferably from 0.01% to 10% and more preferably from 0.1% to 5% of water by weight,
    - optionally, from 0% to 8%, preferably from 0.01% to 5% and more preferably from 0.1% to 3% of additives (including acidity regulators, preservatives, emulsifiers, colorants, sweeteners, flavor enhancers, flavoring substances, humectants, anticaking agents, antioxidants, hydrocolloids, nutrient enhancers, bulking agents, and mixtures thereof) by weight by weight.

7.  Dairy product according to anyone of claims 1 to 6, wherein the dairy product is selected from the group comprising milk, cultured milk (such as cheese, yogurt, sour cream, and kefir cream), and ice cream, preferably the dairy product is a yogurt.

8.  Process of fabricating the dairy product as defined by anyone of claims 1 to 7 comprising the steps of:

    (a) Mixing all ingredients used for preparing the dairy product for 5 to 60 minutes, preferably for 15 to 45 minutes, and more preferably for approximately 30 minutes,
    (b) Preheating the mixture obtained in step (a) to a temperature comprised between 50°C and 100°C, preferably between 60°C and 80°C, and more preferably to approximately 65°C,
    (c) Heating the preheated mixture obtained in step (b) at a temperature comprised between 60°C and 145°C for 1 second to 60 minutes, preferably at a temperature comprised between 80°C and 120°C for 1 to 30 minutes, and more preferably at approximately 95°C for approximately 5 minutes,
    (d) Cooling the heated mixture obtained in step (c) and optionally adding a starter culture,
    (e) Fermenting the cooled mixture which optionally comprises the started culture obtained in step (d) at a temperature comprised between 4°C and 60°C, preferably between 20°C and 50°C and more preferably at approximately 43°C until the mixture has a pH comprised between 3 and 5, preferably between 3.5 and 4.8, and more preferably a pH of 4.6,
    (f) Smoothing the fermented mixture obtained in step (e) with a homogenizer, and
    (g) Packing the smooth mixture obtained in step (f).

**Patentansprüche**

1.  Milcherzeugnis, umfassend mehr als 70 Gew.-% Milch, in Bezug auf das Gesamtgewicht des Milcherzeugnisses, und eine Stärkemischung, wobei die Stärkemischung besteht aus:

    (a) einer nativen Buchweizenstärke, und
    (b) gegebenenfalls einer zweiten nativen Stärke, ausgewählt aus der Gruppe bestehend aus Wachsmaisstärke, Maisstärke, Tapiokastärke, Wachstapiokastärke, Kartoffelstärke, Wachskartoffelstärke, Süßkartoffelstärke, Wachssüßkartoffelstärke, Reisstärke, Wachsreisstärke, Hirsestärke, Amarantstärke, Pfeilwurzelstärke, Lotuswurzelstärke, Quinoastärke und Mischungen davon, bevorzugt Kartoffelstärke, Tapiokastärke oder Süßkartoffelstärke.

2.  Milcherzeugnis gemäß Anspruch 1, wobei die native Buchweizenstärke von 50 bis 100 Gew.-%, bevorzugt von 75 bis 100 Gew.-% und stärker bevorzugt von 90 bis 100 Gew.-%, in Bezug auf das Gesamtgewicht der Stärkemischung, darstellt und die zweite native Stärke von 0 bis 50 Gew.-%, bevorzugt von 0 bis 25 Gew.-% und stärker bevorzugt von 0 bis 10 Gew.-%, in Bezug auf das Gesamtgewicht der Stärkemischung, darstellt.

3. Milcherzeugnis gemäß Anspruch 1 oder 2, wobei die Stärkemischung von 0,05 Gew.-% bis 10 Gew.-%, bevorzugt von 0,1 Gew.-% bis 5 Gew.-% und stärker bevorzugt von 0,5 Gew.-% bis 2 Gew.-%, in Bezug auf das Gesamtgewicht des Milcherzeugnisses, darstellt.

4. Milcherzeugnis gemäß einem der Ansprüche 1 bis 3, wobei die Stärkemischung eine Spitzenviskosität im Bereich von 1500 bis 4200 cP, bevorzugt von 1800 cP bis 4000 cP und stärker bevorzugt von 2200 cP bis 3800 cP aufweist, wenn sie bei 8% Suspension unter Verwendung einer Schnellviskositätsanalyse (RVA) auf bis zu 95 °C erhitzt worden ist.

5. Milcherzeugnis gemäß einem der Ansprüche 1 bis 4, wobei die Stärkemischung eine Verkleisterungstemperatur im Bereich von 65 °C bis 85 °C, bevorzugt von 68 °C bis 80 °C und stärker bevorzugt von 70 °C bis 75 °C aufweist.

6. Milcherzeugnis gemäß einem der Ansprüche 1 bis 5, wobei das Milcherzeugnis ferner umfasst

- mehr als 80 Gew.-%, stärker bevorzugt mehr als 90 Gew.-% und noch stärker bevorzugt zwischen 90 Gew.-% und 95 Gew.-% Milch,
- von 0 bis 30 Gew.-%, bevorzugt von 3 bis 20 Gew.-% und stärker bevorzugt von 5 bis 10 Gew.-% Zucker,
- von 0,05 Gew.-% bis 10 Gew.-%, bevorzugt von 0,1 Gew.-% bis 5 Gew.-% und stärker bevorzugt von 0,5 Gew.-% bis 2 Gew.-% Stärke oder Stärkemischung,
- gegebenenfalls von 0 Gew.-% bis 1 Gew.-%, bevorzugt von 0,0001 Gew.-% bis 0,05 Gew.-% und stärker bevorzugt von 0,001 Gew.-% bis 0,005 Gew.-%, Starterkultur,
- gegebenenfalls von 0 Gew.-% bis 10 Gew.-%, bevorzugt von 0,01 Gew.-% bis 5 Gew.-% und stärker bevorzugt von 0,1 Gew.-% bis 3 Gew.-% Molkenprotein und/oder andere Quellen an Protein,
- gegebenenfalls von 0 Gew.-% bis 20 Gew.-%, bevorzugt von 0,01 Gew.-% bis 10 Gew.-% und stärker bevorzugt von 0,1 Gew.-% bis 5 Gew.-% Wasser,
- gegebenenfalls von 0 Gew.-% bis 8 Gew.-%, bevorzugt von 0,01 Gew.-% bis 5 Gew.-% und stärker bevorzugt von 0,1 Gew.-% bis 3 Gew.-% Additive (umfassend Säureregulatoren, Konservierungsmittel, Emulgatoren, Farbstoffe, Süßstoffe, Geschmacksverstärker, Aromastoffe, Feuchthaltemittel, Antibackmittel, Antioxidantien, Hydrokolloide, Nährstoffverstärker, Füllmittel und Mischungen davon).

7. Milcherzeugnis gemäß einem der Ansprüche 1 bis 6, wobei das Milcherzeugnis ausgewählt ist aus der Gruppe umfassend Milch, kultivierte Milch (wie Käse, Joghurt, saure Sahne und Kefircreme) und Eiscreme, wobei das Milcherzeugnis bevorzugt ein Joghurt ist.

8. Verfahren zum Herstellen eines Milcherzeugnisses, wie in einem der Ansprüche 1 bis 7 definiert, umfassend die Schritte aus:

(a) Mischen aller Zutaten, welche zum Zubereiten des Milcherzeugnisses verwendet werden, für 5 bis 60 Minuten, bevorzugt für 15 bis 45 Minuten, und stärker bevorzugt für ungefähr 30 Minuten,
(b) Vorwärmen der in Schritt (a) erhaltenen Mischung auf eine Temperatur zwischen 50 °C und 100 °C, bevorzugt zwischen 60 °C und 80 °C, und stärker bevorzugt auf ungefähr 65 °C,
(c) Erhitzen der in Schritt (b) erhaltenen vorgewärmten Mischung bei einer Temperatur zwischen 60 °C und 145 °C für 1 Sekunde bis 60 Minuten, bevorzugt bei einer Temperatur zwischen 80 °C und 120 °C für 1 bis 30 Minuten, und stärker bevorzugt bei ungefähr 95 °C für ungefähr 5 Minuten,
(d) Abkühlen der in Schritt (c) erhaltenen erhitzten Mischung und gegebenenfalls Zugeben einer Starterkultur,
(e) Fermentieren der abgekühlten Mischung, welche gegebenenfalls die in Schritt (d) erhaltene Starterkultur umfasst, bei einer Temperatur zwischen 4 °C und 60 °C, bevorzugt zwischen 20 °C und 50 °C und stärker bevorzugt bei ungefähr 43 °C, bis die Mischung einen pH-Wert zwischen 3 und 5, bevorzugt zwischen 3,5 und 4,8, und stärker bevorzugt einen pH-Wert von 4,6 aufweist,
(f) Glätten der in Schritt (e) erhaltenen fermentierten Mischung mit einem Homogenisator, und
(g) Abpacken der in Schritt (f) erhaltenen glatten Mischung.

**Revendications**

1. Produit laitier comprenant plus de 70 % en poids de lait par rapport au poids total du produit laitier, et un mélange d'amidon, le mélange d'amidon consistant en :

   (a) un amidon de sarrasin natif, et
   (b) facultativement un second amidon natif choisi dans le groupe consistant en amidon de maïs cireux, amidon de maïs, amidon de tapioca, amidon de tapioca cireux, amidon de pomme de terre, amidon de pomme de terre cireuse, amidon de patate douce, amidon de patate douce cireuse, amidon de riz, amidon de riz cireux, amidon de millet, amidon d'amarante, amidon de maranta, amidon de racine de lotus, amidon de quinoa et leurs mélanges, de préférence de l'amidon de pomme de terre, de l'amidon de tapioca ou de l'amidon de patate douce.

2. Produit laitier selon la revendication 1, dans lequel l'amidon de sarrasin natif représente de 50 à 100 %, de préférence de 75 à 100 % et plus préférentiellement de 90 à 100 % en poids par rapport au poids total du mélange d'amidon, et le second amidon natif représente de 0 à 50 %, de préférence de 0 à 25 % et plus préférentiellement de 0 à 10 % en poids par rapport au poids total du mélange d'amidon.

3. Produit laitier selon la revendication 1 ou 2, dans lequel le mélange d'amidon représente de 0,05 % à 10 %, de préférence de 0,1 % à 5 % et plus préférentiellement de 0,5 % à 2 % en poids par rapport au poids total du produit laitier.

4. Produit laitier selon l'une quelconque des revendications 1 à 3, dans lequel le mélange d'amidon présente une viscosité maximale dans la plage de 1500 à 4200 cP, de préférence de 1800 cP à 4000 cP et plus préférentiellement de 2200 cP à 3800 cP, lorsqu'il est chauffé jusqu'à 95 °C à 8 % de suspension à l'aide d'une analyse rapide de viscosité (RVA).

5. Produit laitier selon l'une quelconque des revendications 1 à 4, dans lequel le mélange d'amidon présente une température de gélatinisation dans la plage de 65 °C à 85 °C, de préférence de 68 °C à 80 °C et plus préférentiellement de 70 °C à 75 °C.

6. Produit laitier selon l'une quelconque des revendications 1 à 5, dans lequel le produit laitier comprend en outre

   - plus de 80 %, plus préférentiellement plus de 90 %, et encore plus préférentiellement entre 90 % et 95 % de lait en poids,
   - de 0 à 30 %, de préférence de 3 à 20 % et plus préférentiellement de 5 à 10 % de sucres en poids,
   - de 0,05 % à 10 %, de préférence de 0,1 % à 5 % et plus préférentiellement de 0,5 % à 2 % d'amidon ou de mélange d'amidon en poids,
   - facultativement, de 0 % à 1 %, de préférence de 0,0001 % à 0,05 % et plus préférentiellement de 0,001 % à 0,005 % de culture de départ en poids,
   - facultativement, de 0 % à 10 %, de préférence de 0,01 % à 5 % et plus préférentiellement de 0,1 % à 3 % de protéine de lactosérum et/ou d'autres sources de protéine en poids,
   - facultativement, de 0 % à 20 %, de préférence de 0,01 % à 10 % et plus préférentiellement de 0,1 % à 5 % d'eau en poids,
   - facultativement, de 0 % à 8 %, de préférence de 0,01 % à 5 % et plus préférentiellement de 0,1 % à 3 % d'additifs (y compris régulateurs d'acidité, conservateurs, émulsifiants, colorants, édulcorants, exhausteurs de goût, substances aromatisantes, humectants, agents antiagglomérants, antioxydants, hydrocolloïdes, amplificateurs de nutriments, diluants et leurs mélanges) en poids par poids.

7. Produit laitier selon l'une quelconque des revendications 1 à 6, dans lequel le produit laitier est choisi dans le groupe comprenant le lait, le lait de culture (tel que le fromage, le yaourt, la crème aigre, et la crème kéfir), et la crème glacée, de préférence le produit laitier est un yaourt.

8. Procédé de fabrication du produit laitier tel que défini par l'une quelconque des revendications 1 à 7 comprenant les étapes de :

   (a) mélange de tous les ingrédients utilisés pour préparer le produit laitier pendant 5 à 60 minutes, de préférence pendant 15 à 45 minutes, et plus préférentiellement pendant environ 30 minutes,
   (b) préchauffage du mélange obtenu à l'étape (a) à une température comprise entre 50 °C et 100 °C, de préférence entre 60 °C et 80 °C, et plus préférentiellement à environ 65 °C,

(c) chauffage du mélange préchauffé obtenu à l'étape (b) à une température comprise entre 60 °C et 145 °C pendant 1 seconde à 60 minutes, de préférence à une température comprise entre 80 °C et 120 °C pendant 1 à 30 minutes, et plus préférentiellement à environ 95 °C pendant environ 5 minutes,

(d) refroidissement du mélange chauffé obtenu à l'étape (c) et éventuellement ajout d'une culture de départ,

(e) fermentation du mélange refroidi qui comprend facultativement la culture démarrée obtenue à l'étape (d) à une température comprise entre 4 °C et 60 °C, de préférence entre 20 °C et 50 °C et plus préférentiellement à environ 43 °C jusqu'à ce que le mélange ait un pH compris entre 3 et 5, de préférence entre 3,5 et 4,8, et plus préférentiellement un pH de 4,6,

(f) lissage du mélange fermenté obtenu à l'étape (e) avec un homogénéisateur, et

(g) emballage du mélange lisse obtenu à l'étape (f).

**Figure 1**

Figure 2

**Figure 3**

Figure 4

**Figure 5**

Figure 6

Figure 7

Figure 8

BWS2

BWS2-PS

Claria+

Control

**Figure 9**

**EP 4 084 620 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0721471 B1
- WO 2013173161 A1
- WO 2014053833 A
- WO 2019095168 A1
- CN 1961729
- GB 27602014 A